# EUROPÄISCHE PATENTSCHRIFT

(11) **EP 0 790 220 B1**
(45) Veröffentlichungstag und Bekanntmachung des Hinweises auf die Patenterteilung: **07.10.1998**
(21) Anmeldenummer: 97100757.0
(22) Anmeldetag: 18.01.1997
(51) Int. Cl.: C03C 8/02

(54) **Schwarze Glasfritte, Verfahren zu ihrer Herstellung und deren Verwendung**
Black glass frit, method for its production and its use
Fritte de verre noire, méthode pour sa production et son utilisation

(30) Priorität: 15.02.1996 DE 19605617
(43) Veröffentlichungstag der Anmeldung: 20.08.1997
(73) Patentinhaber: CERDEC AKTIENGESELLSCHAFT KERAMISCHE FARBEN, D-60327 Frankfurt (DE)
(72) Erfinder: Tünker, Gerhard, 63075 Offenbach (DE)

(56) Entgegenhaltungen:
- GB-A- 1 007 296
- US-A- 3 216 847
- CHEMICAL ABSTRACTS, vol. 90, no. 24, 11.Juni 1979 Columbus, Ohio, US; abstract no. 191464v, Seite 290; XP002031246 & CS 175 067 A (TUPY ET AL.) 15.November 1978

## Beschreibung

Die Erfindung richtet sich auf eine schwarze Glasfritte, deren Zusammensetzung im wesentlichen frei von Blei und Cadmium ist. Weitere Gegenstände sind ein Verfahren zur Herstellung der schwarzen Glasfritte und deren Verwendung zur Herstellung von Glasemails und anderen Dekoren auf einbrennfähigen Substraten.

Zur Dekoration von Glasartikeln, insbesondere Glasscheiben, werden Glasfarben verwendet, welche einen oder mehrere Farbkörper, wie Pigmente, und eine oder mehrere Glasfritten enthalten. Die Glasfarbe wird nach dem Auftrag auf ein Substrat eingebrannt, wobei sich ein Glasemail ausbildet. Bei der Applikation von Glasfarben auf Glasscheiben muß das Schmelzverhalten der Glasfarben den typischen Bedingungen des Biege- und Vorspannungsprozesses angepaßt sein: Typische Einbrennbedingugnen sind Temperaturen zwischen etwa 600 und 650 °C und Brennzeiten von wenigen Minuten.

Speziell im Autoglasbereich werden schwarze Glasfarben mit sehr niedriger Licht- und UV-Durchlässigkeit benötigt. Als schwarze Farbkörper enthalten derartige Glasfarben meistens Farboxide auf der Basis von Oxiden und Mischoxiden von Chrom, Kobalt, Nickel und Kupfer. Typische Werte für die Lichtdurchlässigkeit sind kleiner 0,1 % für einen etwa 30 µm dicken eingebrannten Film. Eine solche Transmission wird von Glasfarben erreicht, welche üblicherweise 15 bis 30 Gew.-% schwarze Farbkörper enthalten. Da die Farbkörper üblicherweise erheblich teurer sind als die Glasfritte, besteht Bedarf an Glasfritten mit geringer Lichtdurchlässigkeit, welche in Glasemails mit einem möglichst geringen Gehalt an teuren Farbkörpern eine möglichst geringe Transmission aufweisen.

Die sulfidische Einfärbung von technischem Glas mit Eisenoxid führt zwar zur bekannten braunen Sulfoferrit-Färbung, nicht aber zu einer Schwarzfärbung.

Es ist auch bekannt, daß titanhaltige Gläser eine gelbliche bis braune oder blaue Färbung besitzen, wenn diese unter reduzierenden Bedingungen erschmolzen werden. Gemäß DE-Patentschrift 44 28 234 zeigt eine Glaszusammensetzung auf der Basis eines alkaliarmen Borsilikatglases mit einem Zusatz von 0,1 bis 3 Gew.-% TiO₂, welche in Gegenwart von 0,01 bis 0,1 Gew.-% metallischem Silicium erschmolzen wird, eine intensive blaue bis schwarze Färbung. Wie die Erfinder der vorliegenden Erfindung feststellten, ist die Färbung dieser Gläser in dünnen, etwa 20 µm dicken Schichten nicht ausreichend, um unter Verwendung dieser Gläser die Einsatzmenge an schwarzen Farbkörpern bei der Herstellung schwarzer Glasfarben für den Autoglasbereich nennenswert reduzieren zu können.

Auch eine Glaszusammensetzung gemäß EP-B 0 482 535 mit einem färbenden Anteil auf der Basis von FeO, Selen und CoO ist nur grau, nicht aber schwarz.

Bei Front- und insbesondere Heckscheiben muß eine Bedruckung der mit einer Glasfarbe beschichteten Glasscheibe mit einer Silberleitpaste zwecks Ausbildung von Leiterbahnen möglich sein. Schließlich sollte während des Einbrennvorgangs und Verformung der Scheibe eine Migration von Silber durch die Farbe in das Glas vermieden werden, da die Migration zu einer Gelbfärbung des Floatglases führt. Eine weitere Anforderung an Glasfarben für den Autoglasbereich besteht darin, daß die aufgeschmolzene Farbe beim Verformen der Scheibe nach dem sogenannten Preß-Biege-Verfahren nicht mit dem Preßwerkzeug verkleben darf.

Zudem soll die eingebrannte Glasfarbe eine hohe Säurebeständigkeit gegen Galvanoelektrolyte (pH kleiner 1) aufweisen. Schließlich soll die in der Glasfarbe enthaltene Glasfritte frei von Blei und Cadmium sein.

In der Fachwelt sind verschiedene blei- und cadmiumfreie Glasfritten und sie enthaltende Farbzubereitungen für die Ausbildung von Glasemails auf Autoglasscheiben, bekannt. Üblicherweise handelt es sich hierbei um Frittensysteme auf der Basis eines Wismut-Alkali-Borsilikatglases oder eines Alkali-Zink-Borsilikatglases oder Mischungen davon.

Bekannte Glasfrittensysteme sind nicht nur weitgehend transparent, sie erfüllen auch die vorgenannten anwendungstechnischen Erfordernisse nur teilweise: So basiert die blei- und cadmiumfreie Glasfritte gemäß EP-A 0 267 154 auf einem Gehalt an Na₂O, ZnO, B₂O₃ und SiO₂ und kann einige weitere Oxide, wie Bi₂O₃ und Li₂O, enthalten. Wie die Beispiele zeigen, erfüllen aber nur Glasfritten mit einem Bi₂O₃- oder Li₂O-Gehalt den für die Anwendung auf Glas geforderten Aufschmelzbereich von deutlich unterhalb 650 °C. Nachteilig an lithiumhaltigen Glasfritten ist, daß es hiermit zur Verminderung der Bruchfestigkeit von damit emaillierten Glasscheiben kommt.

Auch in der EP-A 0 370 683 werden nur ein transparenter Glasfluß mit 45 bis 65 Gew.-% Bi₂O₃ sowie eine solche Fritte enthaltende Farbzubereitungen zur Herstellung von Glasemails beschrieben. Durch Verwendung derartiger Farbzubereitungen zur Herstellung von emaillierten Autoglasscheiben wird das Kleben der damit bedruckten Scheiben in der Biegeform vermieden. Dies wird erreicht durch einen Kristallisationsprozeß, der nach dem Aufschmelzen der Farbe einsetzt. Glasfritten mit hohem Wismutgehalt zeigen zwar verbesserte Eigenschaften, jedoch sind derartige Fritten in Abhängigkeit vom Wismutgehalt viel teurer als wismutarme oder wismutfreie Glasfritten.

Zudem enthält der Glasfluß auch 2 bis 6 Gew.-% Li₂O, was zu einer deutlichen Schwächung der Bruchfestigkeit des emaillierten Glases, besonders bei Mehrfachdrucken, führt. Eine Zusammensetzung gemäß WO 92/0429 enthält zwar auch eine kristallisierbare Glasfritte und Keimbildner auf der Basis von Zn₂SiO₄, Nachteil dieser Glasemails ist aber deren mäßige Saurebeständigkeit.

Anti-Stick-Glasfarben, wie sie in der US 4,959,090 beschrieben werden, enthalten Metallpulver und sind für den Einsatz zur Herstellung emaillierter gebogener Glasscheiben in Preßbiegeöfen geeignet. Nachteilig an den hiermit erzeugten Glasemails ist deren ungenügende Säurebeständigkeit: Zudem kommt es zu einer Verfärbung der schwarzen Farben zu grau- oder braunstichigen Farbtönen.

Das bekannte Problem der während des Einbrennens auftretenden Silberdiffusion aus einer auf die Emailfarbe gedruckten Silberpaste läßt sich gemäß EP-A 0 505 892 durch die Verwendung bleifreier Glasfritten, die Schwefel oder Sulfide gelöst enthalten, beheben; die Fritten sind aber nicht schwarz und durch den hohen Anteil an Zinkoxid wird wiederum die Säurebeständigkeit gemindert.

Aufgabe der vorliegenden Erfindung ist demgemäß, eine neue Glasfritte bereitzustellen, welche intensiver schwarz gefärbt ist als vorbekannte schwarze Glasfritten. Eine weitere Aufgabe richtet sich darauf, daß die schwarze Glasfritte im wesentlichen frei von Bestandteilen ist, welche in toxikologischer (PbO und CdO) und anwendungstechnischer Hinsicht (wie Li₂O und ZnO) in Glasfarben nachteilig sind. Schließlich richtet sich eine weitere Aufgabe darauf, daß die schwarze Glasfritte in Glasemails für Autoglasscheiben ohne Minderung der Gebrauchseigenschaften eingesetzt werden kann und daß die geforderte niedrige Transmission bei sehr dünnen Glasscheiben (etwa zwischen 10 und 50 µm) mit einer geringeren Menge an der Glasfritte zuzusetzenden Farbkörpern erreicht wird als unter Verwendung vorbekannter blei- und cadmiumfreier Glasfritten.

Die Aufgabe wird gelöst durch eine schwarze Glasfritte, enthaltend in der Glaszusammensetzung

| | | |
|---|---|---|
| K₂O | 10 - 17 | Mol-% |
| B₂O₃ | 10 - 25 | Mol-% |
| TiO₂ | 15 - 30 | Mol-% |
| SiO₂ | 30 - 55 | Mol-% |
| Al₂O₃ | 0 - 5 | Mol-% |
| Bi₂O₃ | 0 - 5 | Mol-% |
| Fe₂O₃ | 0,05 - 3 (Gesamt-Eisen) | Mol-% |
| S | 0,1 - 3 (Gesamt-Schwefel) | Mol-% |

und Oxide aus der Reihe PbO, CdO, ZnO, Li₂O, Na₂O, MgO, CaO, SrO, BaO und P₂O₅ in einer Menge von jeweils weniger als 0,5 Gew.-%.

Eine Glasfritte, welche mit Ausnahme des Eisengehalts die anspruchsgemäße Zusammensetzung aufweist, ist in der noch nicht veröffentlichten DE-Patentanmeldung 195 02 653.5 beschrieben worden. Die Offenbarung dieser Anmeldung wird in die vorliegende Anmeldung einbezogen. Eine durch Einbrennen einer Glasfritte gemäß DE-P 195 02 653.5 erhaltene dünne Glasschicht ist schwach gelblich bis günstigstenfalls braunschwarz. Um eine für schwarze Glasemails für den Autoglasbereich ausreichende Intensität zu erzielen, muß das Email 15 bis 30 Gew.-% schwarze Farbkörper enthalten. Es war überraschend, daß bereits durch den Zusatz einer kleinen Menge einer Eisenquelle, wie eines Eisenoxids oder metallischen Eisens, zu einer schwefelhaltigen Zusammensetzung gemäß DE-P 195 02 653.5 und Erschmelzen des glasbildenden Stoffgemischs unter reduzierenden Bedingungen eine intensiv schwarze Glasfritte erhältlich ist. Die intensive Eigenfarbe der erfindungsgemäßen Glasfritte macht eine deutliche Reduzierung der Menge an schwarzen Farbkörpern gegenüber einer eisenfreien, sonst aber gleich zusammengesetzten Fritte möglich. In welcher Form Eisen in der erfindungsgemäßen Fritte gebunden ist, als FeO, FeS, Fe₂O₃, Fe(II)-titanat mit drei- oder/und vierwertigem Titan oder in anderer Form, ist bisher nicht gesichert. In der anspruchsgemäßen Zusammensetzung ist daher der Gesamt-Eisengehalt als Fe₂O₃ angegeben. In analoger Weise ist Gesamt-Schwefel angegeben, der im wesentlichen elementaren Schwefel und sulfidischen Schwefel umfaßt; bei der Analyse der Glasfritte wird der Gesamt-Schwefel als SO₃ erfaßt.

Eine bevorzugte Glasfritte enthält 0,1 bis 2, vorzugsweise 0,1 bis 1 Mol-% Fe₂O₃ (Gesamt-Eisen). Der Gesamt-Schwefel liegt vorzugsweise im Bereich zwischen 0,1 und 2 Mol-%, insbesondere zwischen 0,2 und 1 Mol-%.

Außer den anspruchsgemäß genannten obligatorischen und fakultativen Oxiden kann die Glasfritte zusätzlich auch andere Oxide enthalten. Der Gehalt dieser anderen Oxide wird zweckmäßigerweise auf 5 Gew.-%, vorzugsweise 3 Gew.-%, begrenzt, da durch einen höheren Gehalt die physikalischen und anwendungstechnischen Eigenschaften negativ beeinflußt werden können. Eine weitere bevorzugte schwarze Glasfritte enthält (in Mol-%) 13 bis 16 K₂O, 18 bis 23 B₂O₃, 17 bis 25 TiO₂, 35 bis 50 SiO₂, 0,1 bis 1 Fe₂O₃ (Gesamt-Eisen), 0,1 bis 2 S (Gesamt-Schwefel) und weniger als 3 Gew.-% an anderen Metalloxiden aus der Reihe der genannten und nichtgenannten fakultativen Metalloxide.

Wie zuvor dargestellt, basiert die erfindungsgemäße Fritte auf K₂O, B₂O₃, TiO₂, SiO₂, Fe₂O₃ und S. Erfindungswesentlich ist ferner, daß die Fritte im wesentlichen frei ist von PbO, CdO, P₂O₅, ZnO, Li₂O, Na₂O sowie Erdalkalimetalloxiden. Geringe Anteile (kleiner 0,5 Gew.-%) an den an sich unerwünschten Oxiden können einerseits als Verunreinigungen in den verwendeten Rohstoffen für die Glasherstellung und andererseits durch Reste eines diese unerwünschten Stoffe enthaltenden Glases im verwendeten Glasschmelzofen in die neue Glaszusammensetzung gelangen. Vorzugsweise wird der Gehalt an diesen unerwünschten Oxiden möglichst niedrig gehalten.

Die erfindungsgemäßen Glasfritten zeigen im allgemeinen einen Transformationspunkt T_{g}, gemessen mittels der DSC-Methode (Differential Scanning Calorimetrie), von unterhalb 550 °C; bevorzugte Glasfritten haben einen Transformationspunkt von unterhalb 535 °C.

Die erfindungsgemäßen Glasfritten lassen sich zu einer porenfreien, intensiv schwarzen Glasschicht aufschmelzen. Nach dem eigentlichen Schmelzprozeß kommt es zu Kristallisationseffekten, welche im Hinblick auf die Verwendbarkeit der Glasfritte in Glasfarben für den Autoglasbereich zwecks Vermeidung des Klebens beim Preß-Biege-Verfahren erwünscht sind. Die Mindestschmelztemperatur Tₛ bevorzugter erfindungsgemäßer Glasfritten liegt unter 650 °C, vorzugsweise im Bereich zwischen 590 und 620 °C. Die Mindestschmelztemperatur Tₛ wird im 4-Minuten-Brand auf Glas als Substrat ermittelt; als Beurteilungskriterium wird die Porenfreiheit der aufgeschmolzenen und damit eingebrannten Glasfritte herangezogen. Sofern im Hinblick auf die Anwendung eine niedrigere Mindestschmelztemperatur gewünscht wird, läßt sich eine solche durch Verwendung eines Gemischs aus einer erfindungsgemäßen Glasfritte und einer vorbekannten bleifreien Glasfritte mit niedrigerer Schmelztemperatur erzielen.

Wie aus den Beispielen und dem Vergleichsbeispiel hervorgeht, zeigen die erfindungsgemäßen Glasfritten eine wesentlich geringere Transmission als eine analoge, jedoch im wesentlichen eisenfreie Glasfritte. Die Transmission einer etwa 30 µm dicken pigmentfreien Glasschicht, hergestellt durch Einbrennen einer bevorzugten erfindungsgemäßen Glasfritte, beträgt weniger als 2 %, gemessen über den gesamten sichtbaren Bereich. Die Abhängigkeit der Transmission von der Wellenlänge des sichtbaren Lichts ist gering. Gegenüber eisenfreien, ansonsten im wesentlichen gleich zusammengesetzten Glasfritten erlaubt es die intensive Eigenfarbe der erfindungsgemäßen Glasfritte, die Einsatzmenge an schwarzen Farbkörpern nennenswert zu reduzieren, um zu Glasemails mit vorgegebener niedriger Transparenz zu gelangen.

Die erfindungsgemäße schwarze Glasfritte ist erhältlich, indem ein Gemisch aus metalloxidbildenden üblichen Glasrohstoffen in einer molaren Zusammensetzung entsprechend 10 bis 17 Mol-% K₂O, 10 bis 25 Mol-% B₂O₃, 15 bis 30 Mol-% TiO₂, 30 bis 55 Mol-% SiO₂, 0 bis 5 Mol-% Al₂O₃, 0 bis 5 Mol-% Bi₂O₃, 0,05 bis 3 Mol-% Fe₂O₃ und Oxiden aus der Reihe PbO, CdO, ZnO, Li₂O, Na₂O, MgO, CaO, SrO, BaO und P₂O₅ in einer Menge von jeweils weniger als 0,5 Gew.-%, bezogen auf die Glasfritte, und zusätzlich einer Quelle für Schwefel in einer molaren Menge, welche die in der Glasfritte verbleibende Menge von 0,1 bis 3 Mol-% übersteigt, unter reduzierenden Bedingungen bei 1000 bis 1200 °C geschmolzen, die Schmelze abgeschreckt und das hierbei erhaltende brüchige Material aufgemahlen wird. Die reduzierenden Bedingungen werden durch die Anwesenheit leicht oxidierbarer Stoffe im zu schmelzenden Stoffgemisch erreicht, wie insbesondere durch die Anwesenheit von elementarem Schwefel und/oder Kohlenstoff. Zweckmäßigerweise ist auch die Gasatmosphäre reduzierend, das heißt, arm oder weitgehend frei von Sauerstoff.

Als Rohstoffe zur Herstellung der Glasfritte werden mit Ausnahme von K₂O, das meist als Carbonat eingesetzt wird, vorzugsweise die Oxide, also insbesondere SiO₂, B₂O₃, TiO₂, Al₂O₃ und Bi₂O₃, eingesetzt. Der Eisengehalt kann in Form von metallischem Eisen, einem Fe-Oxid oder einem Fe(II)- oder Fe(III)-Salz, etwa des Carbonts oder Sulfats, in den Ansatz eingebracht werden. Als Quelle für Schwefel eignet sich besonders bevorzugt elementarer Schwefel. Zusätzlich oder alternativ können auch Sulfide, Sulfite und sogar Sulfate als Schwefelquelle Verwendung finden. Zur Herstellung Ag-migrationsbeständiger Fritten sollte zumindest ein Teil des Schwefels in elementarer Form eingesetzt werden. Der Überschuß der Quelle für Schwefel im Glasansatz beträgt üblicherweise mehr als 10 %, oft 50 bis 200 % und mehr, bezogen auf den Schwefelgehalt in der Glasfritte.

Als Alkalikomponente wird typischerweise nur Kaliumoxid eingesetzt. Dieses senkt als typischer Netzwerkwandler stark die Viskosität des Flusses und sollte deshalb mit mindestens 10 Mol-% anwesend sein. Da mit zunehmendem K₂O-Gehalt der Wärmeausdehnungskoeffizient der Glasfritte stark ansteigt, wird der obere Grenzwert auf 17 Mol-% begrenzt. Ein höherer K₂O-Gehalt führt bei der Verwendung der Glasfritte auf Glassubstraten zu Spannungen. Vorzugsweise enthält die Glasfritte 13 bis 16 Mol-% K₂O. Durch Borsäure wird der Schmelzpunkt der Fritte abgesenkt, jedoch kommt es bei einer Menge um und insbesondere oberhalb 25 Mol-% zu einer Verschlechterung der Säurebeständigkeit. Bevorzugt wird eine Menge von 18 bis 23 Mol-% B₂O₃. Durch die Anwesenheit von Titandioxid wird einerseits die Säurebeständigkeit erhöht, andererseits bei Konzentrationen über 15 Mol-% die Viskosität der Glasschmelze abgesenkt. Überraschenderweise läßt sich trotz des relativ hohen Titandioxidgehalts in der Glaszusammensetzung der erfindungsgemäßen Glasfritte homogen und ohne vorzeitige Kristallisationseffekte erschmelzen. Ein bevorzugter TiO₂-Gehalt liegt zwischen 17 und 25 Mol-%. SiO₂ dient als Glasbildner; ein Gehalt unter 30 Mol-% SiO₂ führt zu einer unerwünschten Absenkung der Säureresistenz; ein Gehalt von mindestens 35 Mol-% SiO₂ und insbesondere 40 bis 45 Mol-% wird bevorzugt. Aluminiumoxid kann als fakultativer Bestandteil in geringer Menge in der Glaszusammensetzung enthalten sein. Durch die Anwesenheit von Wismutoxid wird einerseits die chemische Beständigkeit erhöht, andererseits der Schmelzpunkt abgesenkt.

Überraschenderweise zeigen die eingebrannten erfindungsgemäßen Glasfritten auch eine sehr gute Säurebeständigkeit gegen 3 gew.-%ige Salzsäure bei Raumtemperatur nach 5 Minuten Einwirkungszeit. Unter Zugrundelegung einer 5-stufigen Beurteilungsskala (1 = abgelöst; 2 = abreibbar, 3 = matt, 4 = schwacher Angriff, 5 = kein Angriff) kann der eingebrannten erfindungsgemäßen Glasfritte eine Säurebeständigkeit im Bereich zwischen 3 und 5, vorzugsweise zwischen 4 und 5, zugeordnet werden.

Aufgrund des unerwartet günstigen Eigenschaftsbilds der erfindungsgemäßen Glasfritten lassen sich diese sehr gut zur Herstellung von tiefschwarzen Glasemails und anderen keramischen Dekoren verwenden. Für derartige Zwecke werden Farbzubereitungen eingesetzt, welche eine Glasfritte und ein anorganisches keramisches Farbpigment enthalten. Eine solche Farbzubereitung enthält im allgemeinen eine oder mehrere erfindungsgemäße Glasfritten in einer Menge von 35 bis 99 Gew.-%, ein oder mehrere Farbpigmente in einer Menge von 1 bis 20 Gew.-% und eine oder mehrere andere bleifreie Glasfritten in einer Menge von 0 bis 35 Gew.-%, etwa solche, wie sie in den zuvor zitierten Dokumenten beschrieben sind. Bei Glasfarben für den Autoglassektor werden vorzugsweise oxidische Pigmente, etwa solche auf Spinellbasis, verwendet. Meistens reicht eine Menge von weniger als 15 Gew.-% Pigment in der Farbzubereitung aus.

Die Farbzubereitungen können im Trockenauftrag oder vorzugsweise nach Überführung in eine Farbpaste unter Verwendung eines üblichen Mediums mittels Spritz-, Gieß- oder Siebdruckauftrag auf das Substrat aufgetragen werden. Die Farbpaste enthält eine solche Menge an einer zuvor beschriebenen Farbzubereitung, daß sie eine spritz-, gieß- oder siebdruckfähige Konsistenz aufweist. Zur Herstellung der Farbpaste wird ein für derartige Zwecke handelsübliches Medium verwendet; Siebdruckmedien enthalten im wesentlichen ein zur Suspendierung der Feststoffe geeignetes flüssiges organisches, organisch-wäßriges oder wäßriges Lösungsmittel, ein polymeres organisches Bindemittel und nach Bedarf Hilfsmittel zur Einstellung der rheologischen Eigenschaften der Paste sowie zur Beschleunigung des Trocknens nach dem Bedrucken.

Zur Herstellung emaillierter Scheiben für den Kraftfahrzeugbereich wird üblicherweise die Glasfarbe im Siebdruckverfahren aufgetragen; nach dem Trocknen findet der Einbrand während des üblichen Biege- und Vorspannprozesses statt. Die erfindungsgemäßen Farbpasten weisen gute Anti-Sticking-Eigenschaften auf, so daß sie ohne Verklebungsprobleme in Preß-Biege-Öfen eingebrannt werden können. In solchen Öfen erfolgt das Einbrennen und Formgeben bei einer Temperatur um und insbesondere unterhalb 650 °C, vorzugsweise bei einer Temperatur zwischen 610 und 640 °C, bei Brennzeiten von im allgemeinen zwischen 2 und 5 Minuten. Sofern auf der Glasscheibe auch eine Leiterbahn angeordnet sein soll, wird nach dem Bedrucken der Glasplatte mittels einer erfindungsgemäßen Farbpaste nach dem Trocknen derselben eine Silberleitpaste aufgetragen, zweckmäßigerweise gleichfalls im Siebdruckverfahren. Das so beschichtete System wird in einem einzigen Brand eingebrannt, wobei sich die Leiterbahn fest mit der Glasemailschicht verbindet.

Die erfindungsgemäße schwarze Glasfritte sowie die damit hergestellten Glasfarben, eingebrannte Emailschichten und andere Dekore zeichnen sich durch eine Reihe herausragender Eigenschaften aus: Sie sind tiefschwarz, zeigen ein ausgezeichnetes porenfreies Schmelzverhalten und lassen sich bei niedrigen Temperaturen einbrennen. Erst nach dem vollständigen Ausschmelzen kommt es zu Kristallisationserscheinungen, was im Hinblick auf die Verwendung in Glasemails für im Preß-Biege-Verfahren verformte Glasscheiben für den Kraftfahrzeugbereich von Bedeutung ist. Ein weiterer Vorteil ist, daß der Gehalt an Farbkörpern in Glasemails reduziert werden kann. Die Farbintensität der Fritte macht es auch möglich, in Glasemails Farbkörper zu verwenden, welche ganz oder weitgehend frei von Co und Ni sind; damit wird das mit einem solchen Glasemail beschichtete Glas problemlos rezyklierbar. Ferner sind die genannten Gegenstände im wesentlichen frei von Blei und Cadmium, was aus Umwelt- und toxikologischen Gründen von Bedeutung ist. Durch die weitgehende Abwesenheit von Lithiumverbindungen besteht keine Gefahr einer Verminderung der Bruchfestigkeit von mit erfindungsgemäßen Glasfritten emaillierten Glasscheiben. Glasemails mit einer gelösten Schwefel enthaltenden erfindungsgemäßen Glasfritte zeigen ferner eine verminderte Silberdiffusion. Da die Glaszusammensetzung kein oder nur eine niedrige Menge an Wismutoxid enthält, bedarf es keiner oder nur geringen Verwendung an teuerem Wismutoxid. Schließlich ist die hohe Säureresistenz der unter Verwendung der erfindungsgemäßen Glasfritte erhaltenen Glasemails oder keramischen Dekore hervorzuheben.

### Beispiele 1 bis 4

Zur Herstellung der Glasfritten wurden übliche Glasrohstoffe, welche die erfindungswesentlichen und fakultativen Oxide, eine Schwefelquelle und eine Eisenquelle enthalten, gemischt. Ferner wurde dem Gemisch zusätzlich Kohlenstoff als Reduktionsmittel in wirksamer Menge zugesetzt. Einige typische Zusammensetzungen (in Gew.-%) der Versätze zur Herstellung einer Vergleichsfritte sowie der erfindungsgemäßen Fritten sind in der folgenden Tabelle 1a zusammengestellt. Das Mischungsverhältnis der Rohstoffe für SiO₂, TiO₂, K₂O, B₂O₃ und Quelle für Eisen entsprach im wesentlichen jenem der herzustellenden Fritte. Abweichungen zwischen der molaren Zusammensetzung des Gemischs aus den Glasrohstoffen und Hilfsstoffen und jener der daraus hergestellten Glasfritte ergeben sich durch den Verlust an Kohlenstoff und Schwefel durch vollständiges oder teilweises Verbrennen sowie durch den Eintrag von Restbestandteilen aus dem Glasschmelzofen und Verunreinigungen der Glasrohstoffe. Der jeweilige Versatz wurde bei etwa 1100 °C zu einem klaren Fluß aufgeschmolzen, die Schmelze durch Eintrag in Wasser abgeschreckt und das Granulat aufgemahlen. Tabelle 1b enthält die aus dem Versatz des Beispiels 1 (=Vergleichsbeispiel) errechnete Zusammensetzung des Sollwerts in Gew.-% und Mol-% sowie die Analyse der Fritte.

**Tabelle 1a**

| Versätze von Fritten in Gew.-% | | | | |
|---|---|---|---|---|
| Beispiel Nr. | 1 | 2 | 3 | 4 |
| | (Vergleichsbeispiel) | (erfindungsgemäß) | | |
| Quarzmehl | 26,6 | 26,3 | 25,8 | 26,8 |
| Titandioxid | 18,2 | 18,0 | 17,8 | 17,2 |
| Pottasche | 21,8 | 22,0 | 21,5 | 21,5 |
| Borsäure | 28,2 | 27,8 | 28,2 | 28,5 |
| Schwefel | 3,0 | 3,0 | 3,0 | 3,0 |
| Kohlenstoff | 2,0 | 2,0 | 2,0 | 2,0 |
| Eisen(II)oxid | - | 0,9 | 1,7 | - |
| Eisenpulver | - | - | - | 1,0 |

**Tabelle 1b**

| Soll-Zusammensetzung (Mol-% und Gew.-%) und Analyse der Fritte des Vergleichsbeispiels | | | | |
|---|---|---|---|---|
| | Mol-% Soll | Gew.-% Soll | Gew.-% Analyse | Mol-% Analyse |
| SiO₂ | 39,1 | 32,5 | 33,7 | 40,7 |
| Al₂O₃ | - | - | 0,4 *) | 0,3 |
| Na₂O | - | - | 0,1 *) | 0,1 |
| K₂O | 14,0 | 18,3 | 19,5 | 15,0 |
| B₂O₃ | 20,2 | 19,6 | 21,0 | 21,9 |
| TiO₂ | 20,4 | 22,6 | 23,6 | - |
| SO₃ | 6,3 | 7,0 | 0,7 | 0,6 |
| Sonstige Stoffe | - | - | 1,0 **) | ***) |
| Fe₂O₃ | - | - | 0,03 *) | ***) |

| | | | | |
|---|---|---|---|---|
| *) typische Verunreinigungen aus Rohstoffen und Schmelzofen | | | | |
| **) Glühverlust und sonstige Metalloxide | | | | |
| ***) Berechnung in Mol-% ohne sonstige Stoffe und Fe₂O₃ | | | | |

Tabelle 2 enthält die gemessenen Eigenschaften der Fritten.
- Farbton sowie Transmission, gemessen in % bei einer Leitwellenlänge von 550 nm an einer 30 µm dicken, bei 640 °C innerhalb von 4 Minuten auf Glas eingebrannten Schicht aus Glasfritte ohne Farbkörper.
- Transformationspunkt T_{g} mittels DSC-Methode und Mindestschmelztemperatur Tₛ beim 4-Minuten-Brand auf Glas
- Säurebeständigkeit (SB) der eingebrannten Farbe gegen 3 %ige HCl bei Raumtemperatur nach 5 min Einwirkzeit (5-stufige Skala: 1 = abgelöst; 2 = abreibbar, 3 = matt, 4 = schwacher Angriff, 5 = kein Angriff).

**Tabelle 2**

| Eigenschaften der Glasfritte | | | | |
|---|---|---|---|---|
| Vergleichsbeispiel | | Beispiele | | |
| | 1 | 2 | 3 | 4 |
| Farbton | oliv | schwarz | schwarz | schwarz |
| Transmission in % | 47,1 | 1,4 | 0,9 | 0,8 |
| Tg in °C | 535 | 533 | 531 | 530 |
| Ts in °C | 625 | 625 | 620 | 620 |
| SB | 4 | 4 | 4 | 4 |

### Beispiele 5 bis 8

### Herstellung von schwarzem Glasemail auf Autoglas

Als Ausgangsfritte dienten jene des Beispiels 1 und jene des Beispiels 3. Als Farbkörper diente ein handelsübliches Schwarzpigment auf Spinellbasis. Fritte und Pigment wurden im angegebenen Verhältnis (Tabelle 3) trocken gemischt und mit einem üblichen Siebdruckmedium (Cerdec 80893) mittels Mischer und Dreiwalzwerk angepastet. Die erhaltenen Farbpasten wurden mit einem 62 T-Siebdruckgewebe auf die Badseite von 4mm-Grünglas gedruckt und bei 130 °C getrocknet. Der Einbrand erfolgte unter einheitlichen Bedingungen 4 Minuten bei 660 °C Ofentemperatur. Der Tabelle 3 sind der Pigmentanteil, die Transmission und die Säurebeständigkeit (Bewertungsskala) zu entnehmen. Durch den erfindungsgemäß möglichen geringeren Pigmentanteil im Email lassen sich Dekore mit besserem Glanz erhalten.

**Tabelle 3**

| Beispiel Nr. | Fritte (Nr. / Gew.-teile) | Farbkörper (Gew.-teile) | Transmission (%) | Säurebeständigkeit |
|---|---|---|---|---|
| 5 (Vergleich) | 1 / 78 | 22 | 0,2 | 4 |
| 6 | 1 / 90 | 10 | 2,4 | 4 |
| 7 (Erfindung) | 3 / 78 | 22 | kleiner 0,01 | 4 |
| 8 | 3 / 90 | 10 | 0,17 | 4 |

## Patentansprüche

1. Schwarze Glasfritte, enthaltend in der Glaszusammensetzung
| | | |
|---|---|---|
| K₂O | 10 - 17 | Mol-% |
| B₂O₃ | 10 - 25 | Mol-% |
| TiO₂ | 15 - 30 | Mol-% |
| SiO₂ | 30 - 55 | Mol-% |
| Al₂O₃ | 0 - 5 | Mol-% |
| Bi₂O₃ | 0 - 5 | Mol-% |
| Fe₂O₃ | 0,05 - 3 (Gesamt-Eisen) | Mol-% |
| S | 0,1 - 3 (Gesamt-Schwefel) | Mol-% |
und Oxide aus der Reihe PbO, CdO, ZnO, Li₂O, Na₂O, MgO, CaO, SrO, BaO und P₂O₅ in einer Menge von jeweils weniger als 0,5 Gew.-%.

2. Glasfritte nach Anspruch 1,
dadurch gekennzeichnet,
daß sie 0,1 bis 1 Mol-% Fe₂O₃ und 0,1 bis 2 Mol-% S enthält.

3. Glasfritte nach Anspruch 1 oder 2,
dadurch gekennzeichnet,
daß sie
| | | |
|---|---|---|
| K₂O | 13 - 16 | Mol-% |
| B₂O₃ | 18 - 23 | Mol-% |
| TiO₂ | 17 - 25 | Mol-% |
| SiO₂ | 35 - 50 | Mol-% |
| Fe₂O₃ | 0,1 - 1 | Mol-% |
| S | 0,1 - 2 | Mol-% |
| Bi₂O₃ | 0 - 3 | Mol-% |
und weniger als 3 Gew.-% an anderen Metalloxiden enthält.

4. Glasfritte nach einem der Ansprüche 1 bis 3,
dadurch gekennzeichnet,
daß sie eine Mindestschmelztemperatur Tₛ beim 4-Minutenbrand unter 650 °C, vorzugsweise im Bereich von 590 bis 620 °C, aufweist.

5. Glasfritte nach einem der Ansprüche 1 bis 4,
dadurch gekennzeichnet,
daß ihre Transmission für eine 30 µm dicke eingebrannte Glasschicht weniger als 2 % beträgt.

6. Verfahren zur Herstellung einer schwarzen Glasfritte mit einer Zusammensetzung gemäß Anspruch 1,
dadurch gekennzeichnet,
daß man ein Gemisch aus metalloxidbildenden üblichen Glasrohstoffen in einer molaren Zusammensetzung entsprechend 10 bis 17 Mol-% K₂O, 10 bis 25 Mol-% B₂O₃, 15 bis 30 Mol-% TiO₂, 30 bis 55 Mol-% SiO₂, 0 bis 5 Mol-% Al₂O₃, 0 bis 5 Mol-% Bi₂O₃, 0,05 bis 3 Mol-% Fe₂O₃ und Oxiden aus der Reihe PbO, CdO, ZnO, Li₂O, Na₂O, MgO, CaO, SrO, BaO und P₂O₅ in einer Menge von jeweils weniger als 0,5 Gew.-%, bezogen auf die Glasfritte, und zusätzlich einer Quelle für Schwefel in einer molaren Menge, welche die in der Glasfritte verbleibende Menge von 0,1 bis 3 Mol-% übersteigt, unter reduzierenden Bedingungen bei 1000 bis 1200 °C aufschmilzt, die Schmelze abschreckt und das erhaltene brüchige Material aufmahlt.

7. Verfahren nach Anspruch 6,
dadurch gekennzeichnet,
daß das zu schmelzende Gemisch elementaren Schwefel als Quelle für Schwefel enthält und die Gasatmosphäre im Schmelzaggregat reduzierend ist.

8. Verfahren nach Anspruch 6 oder 7,
dadurch gekennzeichnet,
daß das zu schmelzende Gemisch zusätzlich Kohlenstoff enthält.

9. Verwendung einer schwarzen Glasfritte gemäß Anspruch 1 zur Herstellung eines Glasemails oder Dekors auf einem einbrennfähigen Substrat.

## Claims

1. Black glass frit, containing in the glass composition
| | | |
|---|---|---|
| K₂O | 10 - 17 | mol-% |
| B₂O₃ | 10 - 25 | mol-% |
| TiO₂ | 15 - 30 | mol-% |
| SiO₂ | 30 - 55 | mol-% |
| Al₂O₃ | 0 - 5 | mol-% |
| Bi₂O₃ | 0 - 5 | mol-% |
| Fe₂O₃ | 0.05 - 3 (total iron) | mol-% |
| S | 0.1 - 3 (total sulphur) | mol-% |
and oxides from among PbO, CdO, ZnO, Li₂O, Na₂O, MgO, CaO, SrO, BaO and P₂O₅ each in a quantity of less than 0.5 wt.%.

2. Glass frit according to claim 1,
characterised in that
it contains from 0.1 to 1 mol-% Fe₂O₃ and from 0.1 to 2 mol-% S.

3. Glass frit according to claim 1 or 2,
characterised in that
it contains
| | | |
|---|---|---|
| K₂O | 13 - 16 | mol-% |
| B₂O₃ | 18 - 23 | mol-% |
| TiO₂ | 17 - 25 | mol-% |
| SiO₂ | 35 - 50 | mol-% |
| Fe₂O₃ | 0.1 - 1 | mol-% |
| S | 0.1 - 2 | mol-% |
| Bi₂O₃ | 0 - 3 | mol-% |
and less than 3 wt.% of other metal oxides.

4. Glass frit according to one of claims 1 to 3,
characterised in that
it has a minimum melting temperature Tₘ during the 4-minute firing of below 650°C, preferably in the range of from 590°C to 620°C.

5. Glass frit according to one of claims 1 to 4,
characterised in that
its transmission for a fired glass layer of 30 µm in thickness is less than 2%.

6. Method for the production of a black glass frit having a composition according to claim 1,
characterised in that
a mixture of conventional raw materials for glass which form metal oxides, in a molar composition corresponding to 10 to 17 mol-% K₂O, 10 to 25 mol-% B₂O₃, 15 to 30 mol-% TiO₂, 30 to 55 mol-% SiO₂, 0 to 5 mol-% Al₂O₃, 0 to 5 mol-% Bi₂O₃, 0.05 to 3 mol-% Fe₂O₃ and oxides from among PbO, CdO, ZnO, Li₂O, Na₂O, MgO, CaO, SrO, BaO and P₂O₅ each in a quantity of less than 0.5 wt.%, based on the glass frit, and in addition a source of sulphur in a molar quantity which exceeds the remaining quantity of 0.1 to 3 mol-% in the glass frit, is melted under reducing conditions at 1000°C to 1200°C, the melt is rapidly cooled and the brittle material obtained is ground.

7. Method according to claim 6,
characterised in that
the mixture to be melted contains elemental sulphur as a source of sulphur and the gaseous atmosphere in the melting aggregate is reducing.

8. Method according to claim 6 or 7,
characterised in that
the mixture to be melted contains in addition carbon.

9. Use of a black glass frit according to claim 1 for the production of a glass enamel or decoration on a substrate capable of being fired.

## Revendications

1. Fritte de verre noire, contenant dans la composition du verre :
| | | |
|---|---|---|
| K₂O | 10 à 17 | % en moles |
| B₂O₃ | 10 à 25 | % en moles |
| TiO₂ | 15 à 30 | % en moles |
| SiO₂ | 30 à 55 | % en moles |
| Al₂O₃ | 0 à 5 | % en moles |
| Bi₂O₃ | 0 à 5 | % en moles |
| Fe₂O₃ | 0,05 à 3 (fer total) | % en moles |
| S | 0,1 à 3 (soufre total) | % en moles |
et des oxydes sélectionnés parmi PbO, CdO, ZnO, Li₂O, Na₂o, MgO, CaO, SrO, BaO et P₂O₅ en quantité respectivement inférieure à 0,5 % en poids.

2. Fritte de verre selon la revendication 1, caractérisée en ce qu'elle contient 0,1 à 1 % en moles de Fe₂O₃ et 0,1 à 2 % en moles de S.

3. Fritte de verre selon la revendication 1 ou 2, caractérisée en ce qu'elle contient
| | |
|---|---|
| K₂O | 13 à 16 % en moles |
| B₂O₃ | 18 à 23 % en moles |
| TiO₂ | 17 à 25 % en moles |
| SiO₂ | 35 à 50 % en moles |
| Fe₂O₃ | 0,1 à 1 % en moles |
| S | 0,1 à 2 % en moles |
| Bi₂O₃ | 0 à 3 % en moles |
et moins de 3 % en poids d'autres oxydes de métaux.

4. Fritte de verre selon l'une quelconque des revendications 1 à 3, caractérisée en ce qu'elle présente une température de fusion minimale Tₛ lors d'une combustion de 4 minutes en dessous de 650 °C, de préférence dans la plage de 590 à 620°C.

5. Fritte de verre selon l'une quelconque des revendications 1 à 4, caractérisée en ce que sa transmission pour une couche de verre cuite de 30 µm d'épaisseur est inférieure à 2 %.

6. Procédé de fabrication d'une fritte de verre noire ayant une composition selon la revendication 1, caractérisé en ce
qu'on fait fondre dans des conditions réductrices à une température de 1000 à 1200°C un mélange de matières premières du verre usuelles formant des oxydes métalliques dans une composition molaire correspondant à 10 à 17 % en moles de K₂O, de 10 à 25 % en moles de B₂O₃, de 15 à 30 % en moles de TiO₂, de 30 à 55 % en moles de SiO₂; de 0 à 5 % en moles de Al₂O₃, de 0 à 5 % en moles de Bi₂O₃, de 0,05 à 3 % en moles de Fe₂O₃ et des oxydes sélectionnés parmi PbO, CdO Zno, Li₂O, Na₂O, Mgo, CaO, SrO, BaO et P₂O₅ en quantité respectivement inférieure à 0,5 % en poids, par rapport à la fritte de verre, et en outre d'une source de soufre en quantité molaire qui dépasse la quantité subsistant dans la fritte de verre de 0,1 à 3 % en moles, on trempe le bain fondu et on broie le matériau friable obtenu.

7. Procédé selon la revendication 6, caractérisé en ce que le mélange à fondre contient du soufre élémentaire comme source de soufre et l'atmosphère gazeuse dans l'installation de fusion est réductrice.

8. Procédé selon la revendication 6 ou 7, caractérisé en ce que le mélange à fondre contient en outre du carbone.

9. Utilisation d'une fritte de verre noire selon la revendication 1 pour la fabrication d'un émail vitreux ou d'un décor sur un substrat cuit.
